(19)

Europäisches
Patentamt
European
Patent Office
Office européen
des brevets

(11)     **EP 4 057 049 A1**

(12)                          **EUROPEAN PATENT APPLICATION**
                          published in accordance with Art. 153(4) EPC

(43) Date of publication:
     **14.09.2022  Bulletin 2022/37**

(21) Application number: **20883735.1**

(22) Date of filing: **10.11.2020**

(51) International Patent Classification (IPC):
     *G02B 27/01* (2006.01)      *B60K 35/00* (2006.01)
     *G02B 30/00* (2020.01)      *G06T 19/00* (2011.01)
     *G09G 5/00* (2006.01)       *G09G 5/36* (2006.01)
     *H04N 13/128* (2018.01)     *H04N 13/31* (2018.01)
     *H04N 13/317* (2018.01)     *H04N 13/346* (2018.01)
     *H04N 13/363* (2018.01)     *H04N 13/366* (2018.01)

(52) Cooperative Patent Classification (CPC):
     B60K 35/00; G02B 27/01; G02B 30/00;
     G06T 19/00; G09G 5/00; G09G 5/36; H04N 13/128;
     H04N 13/31; H04N 13/317; H04N 13/346;
     H04N 13/363; H04N 13/366

(86) International application number:
     **PCT/JP2020/041872**

(87) International publication number:
     **WO 2021/090956 (14.05.2021 Gazette 2021/19)**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(30) Priority:  **05.11.2019   JP 2019201004**

(71) Applicant: **Kyocera Corporation
     Kyoto-shi Kyoto 612-8501 (JP)**

(72) Inventors:
     • **KUSAFUKA, Kaoru
       Kyoto-shi, Kyoto 612-8501 (JP)**
     • **OGURA, Kenji
       Kyoto-shi, Kyoto 612-8501 (JP)**
     • **TADAUCHI, Ryo
       Kyoto-shi, Kyoto 612-8501 (JP)**

(74) Representative: **TBK
     Bavariaring 4-6
     80336 München (DE)**

(54)  **HEAD-UP DISPLAY, HEAD-UP DISPLAY SYSTEM, AND MOVING BODY**

(57)     A first input unit in a head-up display obtains a distance to an object. A second input unit obtains a user's eye position. An optical system projects, into the user's field of view, a virtual image of an image displayed on a display panel. A processor causes the display panel to display a parallax image. An optical element causes a first image displayed on the display panel to reach the user's first eye and a second image on the display panel to reach the user's second eye. The processor causes the display panel to display an image element in the parallax image as at least partially superimposed on the object. The processor performs first control to fix, in response to the distance to the object greater than or equal to a predetermined first distance, parallax of the image element to a value other than 0 corresponding to the first distance.

FIG. 1

## EP 4 057 049 A1

## Description

### FIELD

The present disclosure relates to a head-up display, a head-up display system, and a movable body.

### BACKGROUND

A known technique is described in, for example, Patent Literature 1.

### CITATION LIST

### PATENT LITERATURE

Patent Literature 1: Japanese Unexamined Patent Application Publication No. 2009-008722

### BRIEF SUMMARY

A head-up display according to an aspect of the present disclosure includes a first input unit, a second input unit, a display panel, an optical system, a processor, and an optical element. The first input unit obtains first positional information about a position of an object including a distance to the object. The second input unit obtains second positional information about a position of at least a first eye or a second eye of a user. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor performs first control to fix, in response to the distance to the object being greater than or equal to a predetermined first distance, parallax of the image element to a value of parallax greater than 0 corresponding to the first distance.

A head-up display system according to another aspect of the present disclosure includes a first detector, a second detector, and a head-up display. The first detector detects first positional information about a position of an object including a distance to the object. The second detector detects second positional information about a position of at least a first eye or a second eye of a user. The head-up display includes a first input unit, a second input unit, a display panel, an optical system, a processor, and an optical element. The first input unit obtains the first positional information from the first detector. The second input unit obtains the second positional information from the second detector. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor fixes, in response to the distance to the object being greater than or equal to a predetermined first distance, parallax of the image element to a value of parallax greater than 0 corresponding to the first distance.

A movable body according to another aspect of the present disclosure includes a head-up display system. The head-up display system includes a first detector, a second detector, and a head-up display. The first detector detects first positional information about a position of an object including a distance to the object. The second detector detects second positional information about a position of at least a first eye or a second eye of a user. The head-up display includes a first input unit, a second input unit, a display panel, an optical system, a processor, and an optical element. The first input unit obtains the first positional information from the first detector. The second input unit obtains the second positional information from the second detector. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor fixes, in response to the distance to the object being greater than or equal to a predetermined first distance, parallax of the image element to a value of parallax greater than 0 corresponding to the first distance.

**BRIEF DESCRIPTION OF DRAWINGS**

The objects, features, and advantages of the present disclosure will become more apparent from the following detailed description and the drawings.

FIG. 1 is a diagram of an example head-up display (HUD) system mounted on a movable body.
FIG. 2 is a schematic diagram of a display device shown in FIG. 1.
FIG. 3 is a diagram of an example display panel shown in FIG. 2 viewed in the depth direction.
FIG. 4 is a diagram of an example parallax barrier shown in FIG. 2 viewed in the depth direction.
FIG. 5 is a diagram describing the relationship between a virtual image and a user's eyes shown in FIG. 1.
FIG. 6 is a diagram showing an area viewable with a left eye in the virtual image for the display panel.
FIG. 7 is a diagram showing an area viewable with a right eye in the virtual image for the display panel.
FIG. 8 is a diagram describing switching of a display of subpixels in response to a change in the positions of the user's eyes.
FIG. 9 is a diagram describing a method for displaying a parallax image when an object is located at an optimum viewing distance.
FIG. 10 is a diagram describing a method for displaying a parallax image when an object is located at a distance between a first distance and a second distance.
FIG. 11 is a diagram describing a method for displaying a parallax image when an object is located at a distance greater than or equal to the first distance.
FIG. 12 is a diagram describing an example image element superimposed on an object viewable by the user when the object is located at a distance greater than or equal to the first distance.
FIG. 13 is a flowchart of a method for displaying a parallax image.
FIG. 14 is a schematic diagram of a HUD system including a liquid crystal shutter as a parallax barrier.
FIG. 15 is an example operating state of the liquid crystal shutter.

**DETAILED DESCRIPTION**

As a head-up display (HUD) with the structure that forms the basis of a HUD according to one or more embodiments of the present disclosure, a known HUD causes images having parallax between them to reach the left and right eyes of a user and projects a virtual image in the field of view of the user to be viewed as a three-dimensional (3D) image with depth.

The HUD that displays a 3D image as a virtual image in the field of view of a user may display a 3D image superimposed at the position of an object within the field of view. In this case, the HUD displays, at the position at which the object is viewable from the user, an image having parallax corresponding to the distance to the object. The processing load in superimposing a 3D image on an object is to be low.

In response to this, one or more aspects of the present disclosure are directed to a HUD, a HUD system, and a movable body that reduce the processing load associated with displaying a 3D image superimposed on an object.

One or more embodiments of the present disclosure will now be described with reference to the drawings. The drawings used herein are schematic and are not drawn to scale relative to the actual size of each component.

Structure of HUD System

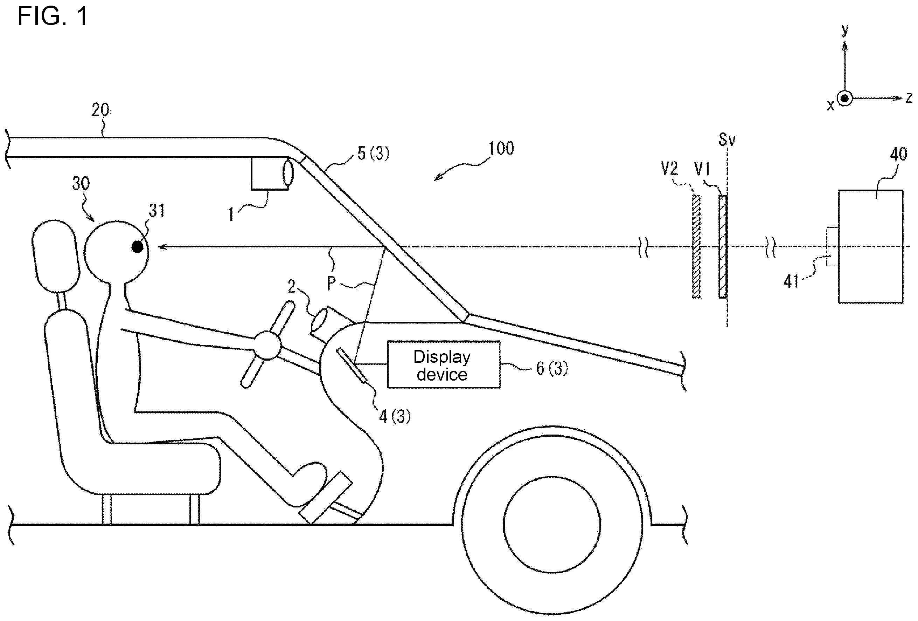

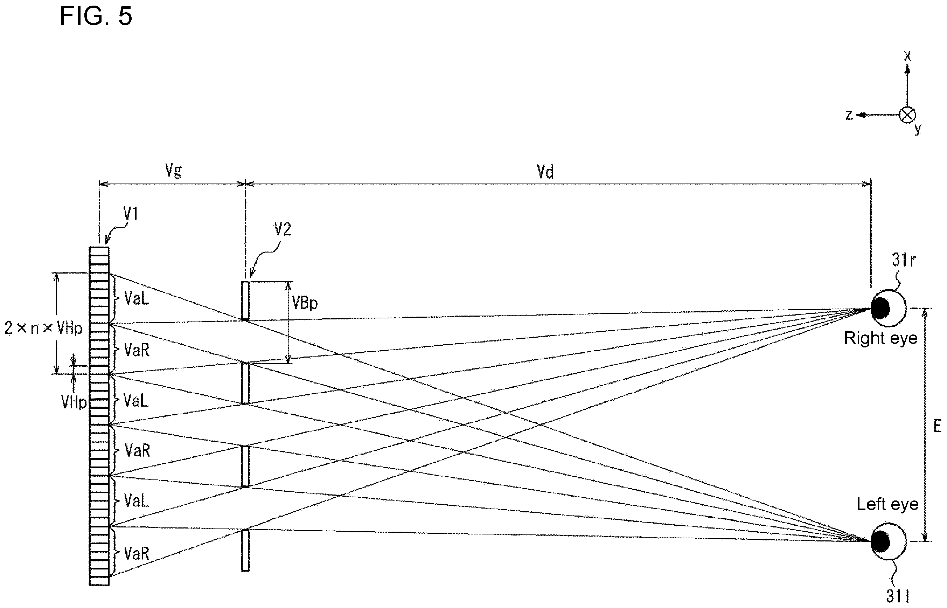

As shown in FIG. 1, a HUD system 100 according to an embodiment of the present disclosure includes a first detector 1, a second detector 2, and a HUD 3. The HUD system 100 may be mounted on a movable body 20. In FIG. 1, x-direction refers to an interocular direction, or the direction along a line passing through a left eye 31l and a right eye 31r of a user 30, z-direction refers to the front-rear direction as viewed from the user 30, and y-direction refers to the height direction perpendicular to x-direction and z-direction. The same definition applies to x-, y-, and z-directions in FIGs. 5 to 11 referred to below.

First Detector

The HUD system 100 includes the first detector 1 to detect positional information about an object 40 located in front of the user 30 (z-direction). The positional information about the object 40 includes information about the distance from the movable body 20 or the user 30 to the object 40. The first detector 1 outputs the positional information about the object 40 to the HUD 3 as first positional information. The first detector 1 may be a distance measuring device. The distance measuring device may include, for example, a stereo camera, an infrared radar, a millimeter wave radar, and a lidar. The distance measuring device may be a device that calculates distances based on images captured with multiple single-lens cameras. The first detector 1 may be a composite device including multiple distance measuring devices.

The stereo camera includes multiple cameras that have parallax between them and cooperate with one another. The stereo camera includes at least two cameras. The stereo camera can capture an image of an object from multiple viewpoints using multiple cameras that cooperate with one another. The stereo camera can detect the distance to an object based on information about the arrangement of the multiple cameras and the parallax of the object included in an image captured by each of the cameras.

The lidar may use a pulsed laser beam to scan space and detect reflected light from an object. The lidar can detect the direction in which the object is present by detecting the direction in which the laser beam is reflected off the object. The lidar can detect the distance to the object by measuring the time taken for the laser beam to be reflected off the object and return. The lidar may be referred to as LiDAR (light detection and ranging or laser imaging detection and ranging).

In one embodiment, the first detector 1 may be fixed in a front portion of the movable body 20 to have its direction of measurement being frontward from the movable body 20. As shown in FIG. 1, the first detector 1 may be installed, for example, in an interior space of the movable body 20. The first detector 1 may detect the position of the object 40 frontward from the movable body 20 through, for example, a windshield. In other embodiments, the first detector 1 may be fixed to a front bumper, a fender grille, a side fender, a light module, or a hood of the movable body 20.

The first detector 1 can detect the positions of various objects 40 located external to the movable body 20. For the movable body 20 being a vehicle, the first detector 1 can detect, as objects 40, another vehicle traveling ahead, pedestrians, road signs, and obstacles on the road. The first detector 1 can output positional information about an object 40. The positional information about the object 40 can be expressed in the Cartesian coordinate system with the origin defined at any position of either the first detector 1 or the movable body 20. The position of the object 40 can be expressed in the polar coordinate system with the origin defined at any position of either the first detector 1 or the movable body 20.

The first detector 1 may be used commonly by a system other than the HUD system 100. For the movable body 20 being a vehicle, for example, the first detector 1 may be used commonly by a system for, for example, brake control, inter-vehicle control with a preceding vehicle, or monitoring of the surrounding environment of the movable body 20.

Second Detector

The HUD system 100 includes the second detector 2 to detect the positions of eyes 31 of the user 30 observing a 3D image. The eyes 31 of the user 30 include the left eye 31l (first eye) and the right eye 31r (second eye) of the user 30. The left eye 31l and the right eye 31r of the user 30 are herein collectively referred to as the eyes 31 without being distinguished from each other. The second detector 2 outputs the detected positions of the eyes 31 of the user 30 to the HUD 3. For the HUD system 100 mounted on the movable body 20, the user 30 may be a driver of the movable body 20. The second detector 2 may include an imaging device or a sensor. The second detector 2 outputs positional information about the eyes 31 of the user 30 to the HUD 3 as second positional information.

For the HUD system 100 mounted on a vehicle as the movable body 20, the second detector 2 may be attached to a rearview mirror or to a nearby component. The second detector 2 may be attached to, for example, an instrument cluster. The second detector 2 may be attached to a center panel. The second detector 2 may be attached to a support of the steering wheel at the center of the steering wheel. The second detector 2 may be attached to a dashboard.

For the second detector 2 including an imaging device such as a camera, the imaging device captures an image of a subject. The imaging device includes an image sensor. The image sensor may include, for example, a charge-coupled device (CCD) image sensor or a complementary metal-oxide semiconductor (CMOS) image sensor. The imaging device is arranged to have the face of the user 30 being at the position of the subject. The second detector 2 may detect the position of at least one of the left eye 31l or the right eye 31r of the user 30. For example, the second detector 2 may define a predetermined position as the origin and detect the direction and the amount of displacement of the positions of the eyes 31 from the origin. The second detector 2 may detect the position of at least one of the left eye 31l or the right eye 31r using an image captured with the imaging device. The second detector 2 may detect, with two or more imaging devices, the position of at least one of the left eye 31l or the right eye 31r as the coordinates in a 3D space.

The second detector 2 may include no camera and may be connected to an external camera. The second detector 2 may include an input terminal for receiving signals from an external imaging device. The external imaging device may be directly connected to the input terminal. The external imaging device may be connected to the input terminal indirectly through a shared network. The second detector 2 including no camera may detect the position of at least one of the left eye 31l or the right eye 31r from an image signal input into the input terminal.

For the second detector 2 including a sensor, the sensor may be an ultrasonic sensor or an optical sensor. The second detector 2 may detect the position of the head of the user 30 with the sensor, and detect the position of at least one of the left eye 31l or the right eye 31r based on the position of the head. The second detector 2 may detect, with one sensor or two or more sensors, the position of at least one of the left eye 31l or the right eye 31r as the coordinates in a 3D space.

The second detector 2 may detect, based on a detection result of the position of at least one of the left eye 31l or the right eye 31r, the moving distances of the left eye 31l and the right eye 31r in the direction in which the eyes are aligned.

The first detector 1 and the second detector 2 can communicate with the HUD 3 in a wired or wireless manner or through a communication network such as a controller area network (CAN).

HUD

The HUD 3 in one embodiment includes a reflector 4, an optical member 5, and a display device 6. The reflector 4 and the optical member 5 are included in an optical system in the HUD 3. The optical system in the HUD 3 may include optical elements such as a lens and a mirror, in addition to the reflector 4 and the optical member 5. In another embodiment, the optical system in the HUD 3 may include a lens instead of or in addition to the reflector 4.

The reflector 4 reflects image light emitted from the display device 6 toward a predetermined area on the optical member 5. The predetermined area reflects image light toward the eyes 31 of the user 30. The predetermined area may be defined by the direction in which the eyes 31 of the user 30 are located relative to the optical member 5 and the direction in which image light is incident on the optical member 5. The reflector 4 may be a concave mirror. The optical system including the reflector 4 may have a positive refractive index.

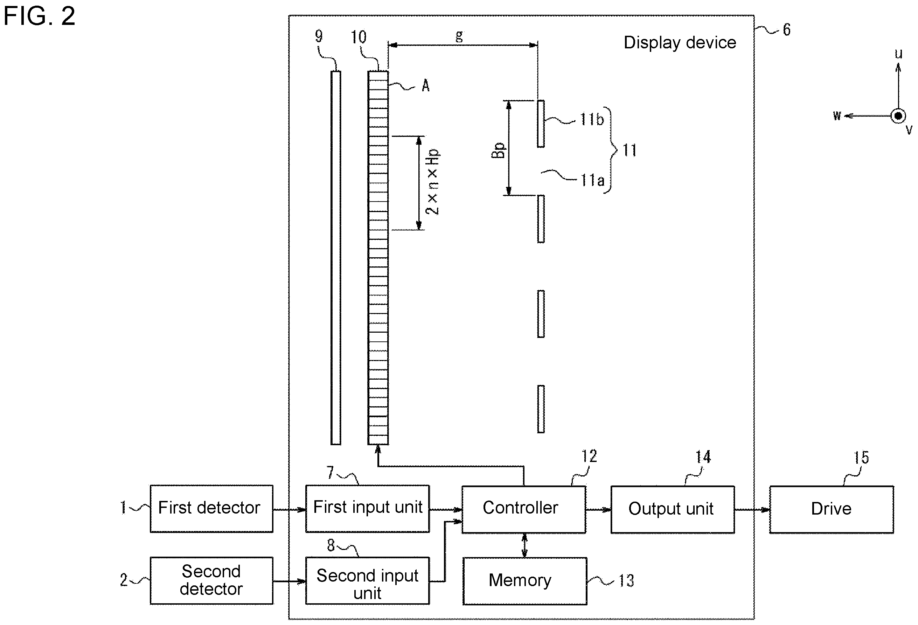

The reflector 4 may include a drive 15 (refer to FIG. 2). The reflector 4 may adjust the angle of the reflective surface with the drive 15. The drive 15 may adjust the direction in which image light is reflected toward the optical member 5 in accordance with the positions of the eyes 31 detected by the second detector 2. The drive 15 may adjust the direction in which image light is reflected toward the optical member 5 based on the first positional information detected by the first detector 1 and the second positional information detected by the second detector 2.

The optical member 5 reflects image light emitted from the display device 6 and reflected by the reflector 4 toward the left eye 31l and the right eye 31r of the user 30. For example, the movable body 20 may include a windshield as the optical member 5. The optical member 5 may include a plate-like combiner for a HUD inside the windshield. The HUD 3 directs light emitted from the display device 6 to the left eye 31l and the right eye 31r of the user 30 along an optical path P. The user 30 can view light reaching the eyes along the optical path P as a virtual image.

The arrangement and the structure of the optical system in the HUD 3 including the reflector 4 and the optical member 5 determine the position of a virtual image plane on which image light emitted from the display device 6 forms a virtual image. In the present embodiment, the virtual image plane may be at a distance of 7.5 m from the eyes 31 of the user 30 frontward from the user 30.

Display Device

As shown in FIG. 2, the display device 6 may include a first input unit 7, a second input unit 8, an illuminator 9, a display panel 10, a parallax barrier 11 as an optical element, a controller 12, a memory 13, and an output unit 14.

The first input unit 7 can receive the first positional information about the position of the object 40 including a distance to the object 40 detected by the first detector 1. The second input unit 8 can receive the second positional information about the eyes 31 of the user 30 detected by the second detector 2.

The first input unit 7 can communicate with the first detector 1, and the second input unit 8 can communicate with the second detector 2, in accordance with the communication schemes used by the respective detectors. The first input unit 7 and the second input unit 8 each include an interface for wired or wireless communication. The first input unit 7 and the second input unit 8 may each include a connector for wired communication, such as an electrical connector or an optical connector. The first input unit 7 and the second input unit 8 may each include an antenna for wireless communication. The first input unit 7 and the second input unit 8 may share either some or all of their components.

The output unit 14 outputs a drive signal to the drive 15, which adjusts the orientation of the reflector 4. The output unit 14 may use a physical connector and wireless communication. In one embodiment, the output unit 14 may be connected to a vehicle network such as a CAN. The drive 15 is controlled by the controller 12 through the output unit 14.

The illuminator 9 may illuminate the display panel 10 with planar illumination light. The illuminator 9 may include a light source, a light guide plate, a diffuser plate, and a diffuser sheet. The illuminator 9 emits, from its light source, illumination light that then spreads uniformly for illuminating the surface of the display panel 10 using, for example, the light guide plate, the diffuser plate, or the diffuser sheet. The illuminator 9 may emit the uniform light toward the display panel 10.

The display panel 10 may be, for example, a transmissive liquid crystal display panel. The display panel 10 is not limited to a transmissive liquid crystal panel, and may be a self-luminous display panel. The self-luminous display panel may include an organic electroluminescent (EL) display and an inorganic EL display. For the display panel 10 being a self-luminous display panel, the display device 6 may not include the illuminator 9.

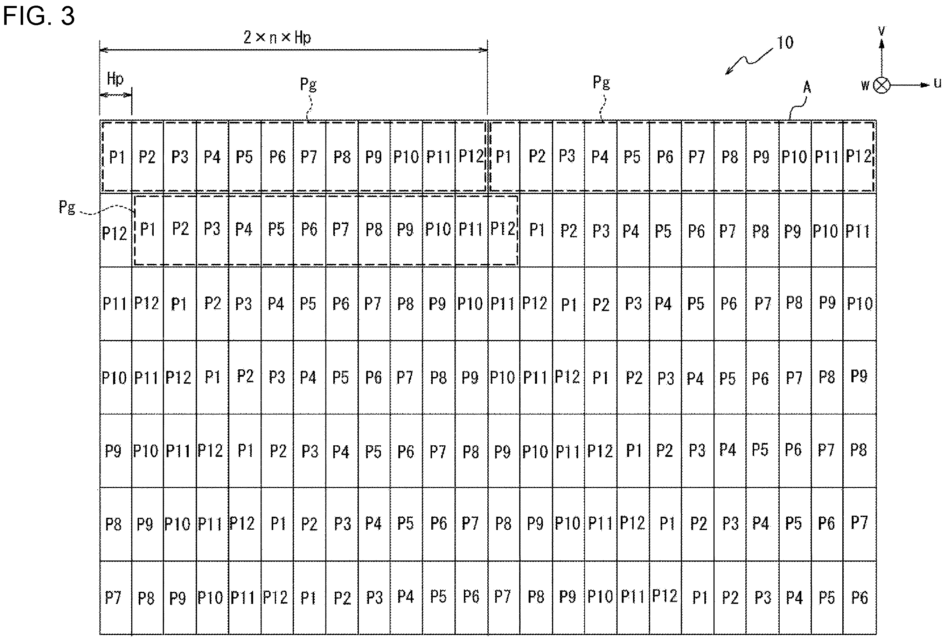

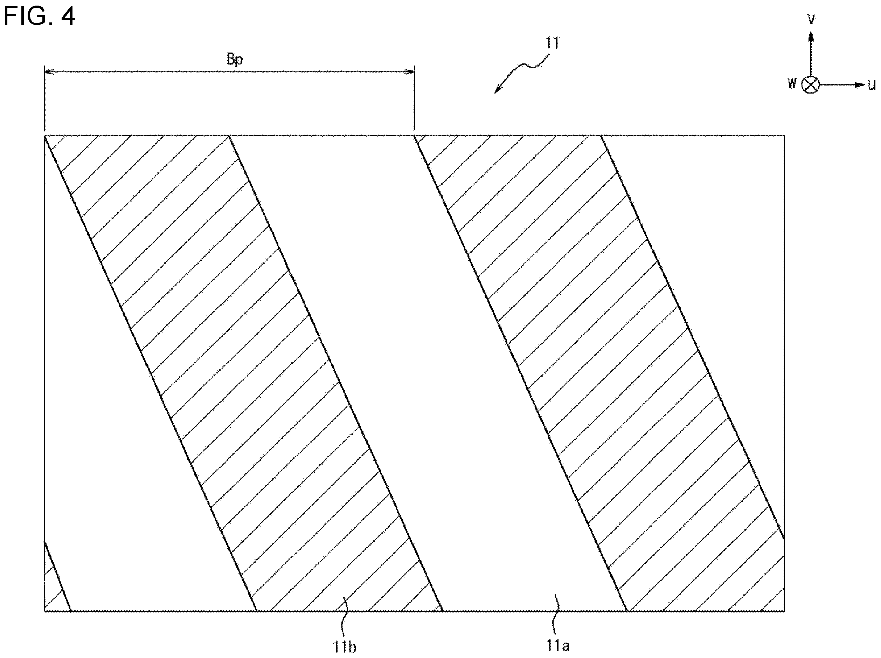

As shown in FIG. 3, the display panel 10 includes a planar active area A including multiple divisional areas. The divisional areas are areas with reference signs P1 to P12 in FIG. 3. The active area A can display a parallax image. The parallax image includes a left eye image and a right eye image (described later). The right eye image has parallax with respect to the left eye image. One of the left eye image and the right eye image is a first image. The other of the left eye image and the right eye image is a second image. In FIGs. 2 and 3, the divisional areas are defined in u-direction and in v-direction orthogonal to u-direction. The direction orthogonal to u-direction and v-direction is referred to as w-direction. The u-direction may be referred to as a horizontal direction. The v-direction may be referred to as a vertical direction. The w-direction direction may be referred to as a depth direction. The same definition as in FIGs. 2 and 3 applies to u-, v- and w-directions in FIGs. 4, 14, and 15.

Each divisional area corresponds to a subpixel. Thus, the active area A includes multiple subpixels arranged in a lattice in u-direction and v-direction.

Each subpixel has one of the colors red (R), green (G), and blue (B). One pixel may be a set of three subpixels with R, G, and B. A pixel may be referred to as a picture element. For example, multiple subpixels included in one pixel may be arranged in u-direction. Multiple subpixels having the same color may be arranged, for example, in v-direction.

The multiple subpixels arranged in the active area A form multiple subpixel groups Pg under control by the controller 12. The subpixel groups Pg are arranged repeatedly in u-direction. Each subpixel group Pg may be aligned with or shifted from the corresponding subpixel group Pg in v-direction. For example, the subpixel groups Pg are repeatedly arranged in v-direction at positions shifted by one subpixel in u-direction from the corresponding subpixel group Pg in adjacent rows. The subpixel groups Pg each include multiple subpixels in predetermined rows and columns. More specifically, the subpixel groups Pg each include $(2 \times n \times b)$ subpixels P1 to PN ($N = 2 \times n \times b$), which are consecutively arranged in b rows in v-direction and in $(2 \times n)$ columns in u-direction. In the example shown in FIG. 3, n is 6, and b is 1. The active area A in FIG. 3 includes the subpixel groups Pg each including 12 subpixels P1 to P12 consecutively arranged in one row in v-direction and in 12 columns in u-direction. In the example shown in FIG. 3, some of the subpixel groups Pg are denoted by reference signs.

Each subpixel group Pg is the smallest unit controllable by the controller 12 to display an image. The subpixels included in each subpixel group Pg are identified using identification information P1 to PN ($N = 2 \times n \times b$). The subpixels P1 to PN ($N = 2 \times n \times b$) included in each subpixel group Pg with the same identification information are controlled by the controller 12 substantially at the same time. Being substantially at the same time is not limited to being exactly at the same time. For example, the subpixels P1 to PN controlled substantially at the same time may include the subpixels being controlled using the same clocks. For example, the controller 12 can switch the image to be displayed by the multiple subpixels P1 from the left eye image to the right eye image substantially at the same time in all the subpixel groups Pg.

As shown in FIG. 2, the parallax barrier 11 is planar along the active area A. The parallax barrier 11 is separate from the active area A by a gap g, or a distance. The parallax barrier 11 may be located opposite to the illuminator 9 from the display panel 10. The parallax barrier 11 may be located between the display panel 10 and the illuminator 9.

The parallax barrier 11 defines the traveling direction of image light emitted from the multiple subpixels. As shown in FIG. 4, the parallax barrier 11 includes multiple light-reducing portions 11b extending in a predetermined direction for reducing image light. The light-reducing portions 11b define, between adjacent light-reducing portions 11b, transmissive portions 11a that are strip areas extending in a predetermined direction in the plane of the parallax barrier 11. The transmissive portions 11a have a higher light transmittance than the light-reducing portions 11b. The transmissive portions 11a may have a light transmittance 10 or more times, or specifically 100 or more times, or more specifically 1000 or more times the light transmittance of the light-reducing portions 11b. The light-reducing portions 11b have a lower light transmittance than the transmissive portions 11a. The light-reducing portions 11b may block image light.

The transmissive portions 11a and the light-reducing portions 11b extend in a predetermined direction along the active area A. The transmissive portions 11a and the light-reducing portions 11b are arranged alternately in a direction orthogonal to the predetermined direction. For example, the predetermined direction is along a diagonal of one subpixel when the display panel 10 and the parallax barrier 11 are viewed in the depth direction (w-direction). For example, the predetermined direction may be the direction that crosses t subpixels in v-direction while crossing s subpixels in u-direction (s and t are relatively prime positive integers) when the display panel 10 and the parallax barrier 11 are viewed in the depth direction (w-direction). The predetermined direction may be v-direction. The predetermined direction corresponds to the direction in which the subpixel groups Pg are arranged. In the example in FIG. 3, each subpixel group Pg is shifted from the corresponding subpixel group Pg by one subpixel in u-direction and by one subpixel in v-direction. Thus, s is 1, and t is 1.

The parallax barrier 11 may be formed from a film or a plate. In this case, the light-reducing portions 11b are parts of the film or plate. The transmissive portions 11a may be slits in the film or plate. The film may be formed from resin or another material. The plate may be formed from resin, metal, or another material. The parallax barrier 11 may be formed from a material other than a film or a plate. The parallax barrier 11 may include a base formed from a light-reducing material or a material containing an additive with light-reducing properties.

Image light emitted from the active area A on the display panel 10 partially transmits through the transmissive portions 11a and is reflected by the reflector 4 to reach the optical member 5. The image light is reflected by the optical member 5 and reaches the eyes 31 of the user 30. This allows the eyes 31 of the user 30 to view a first virtual image V1 in the active area A frontward from the optical member 5. A plane on which the first virtual image V1 is projected is referred to as a virtual image plane Sv. Being frontward herein refers to the direction in which the optical member 5 is located as viewed from the user 30. Being frontward is typically the direction of movement of the movable body 20. As shown in FIG. 5, the user 30 views an appearing image with a second virtual image V2 that is a virtual image of the parallax barrier 11 defining the direction of image light from the first virtual image V1.

The user 30 thus views the image appearing as the first virtual image V1 through the second virtual image V2. In reality, the user 30 does not view the second virtual image V2 that is the virtual image of the parallax barrier 11. However, the second virtual image V2 is hereafter referred to as appearing at the position at which the virtual image of the parallax barrier 11 is formed and as defining the traveling direction of image light from the first virtual image V1. Areas in the first virtual image V1 viewable by the user 30 with image light reaching the position of the left eye 31l of the user 30 are hereafter referred to as left viewable areas VaL. Areas in the first virtual image V1 viewable by the user 30 with image light reaching the position of the right eye 31r of the user 30 are hereafter referred to as right viewable areas VaR.

A virtual image barrier pitch VBp and a virtual image gap Vg are determined to satisfy Formula 1 and Formula 2 below using an optimum viewing distance Vd.

$$E{:}Vd = (n \times VHp){:}Vg \qquad\qquad (1)$$

$$Vd{:}VBp = (Vdv + Vg){:}(2 \times n \times VHp) \qquad (2)$$

The virtual image barrier pitch VBp is the interval in x-direction at which the light-reducing portions 11b projected as the second virtual image V2 are arranged in a direction corresponding to u-direction. The virtual image gap Vg is the distance between the second virtual image V2 and the first virtual image V1. The optimum viewing distance Vd is the distance between the virtual image V2 of the parallax barrier 11 and the position of the left eye 31l or the right eye 31r of the user 30 indicated by the positional information obtained from the second detector 2. An interocular distance E is the distance between the left eye 31l and the right eye 31r. The interocular distance E may be, for example, 61.1 to 64.4 mm, as calculated through studies conducted by the National Institute of Advanced Industrial Science and Technology. VHp is the horizontal length of each subpixel of the virtual image. VHp is the length of one subpixel of the first virtual image V1 in a direction corresponding to x-direction.

As described above, the left viewable areas VaL shown in FIG. 5 are defined on the virtual image plane Sv and viewable with the left eye 31l of the user 30 when image light transmitted through the transmissive portions 11a of the parallax barrier 11 reaches the left eye 31l of the user 30. As described above, the right viewable areas VaR are defined on the virtual image plane Sv and viewable with the right eye 31r of the user 30 when image light transmitted through the transmissive portions 11a of the parallax barrier 11 reaches the right eye 31r of the user 30.

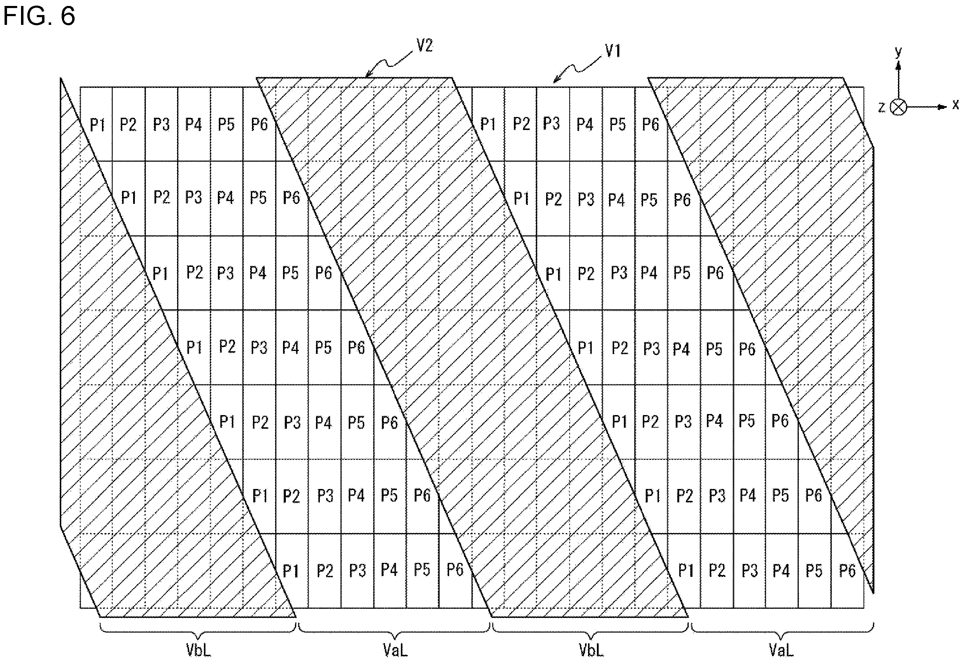

FIG. 6 shows an example array of subpixels of the first virtual image V1 as viewed with the left eye 31l of the user 30 using the parallax barrier 11 with an aperture ratio of 50%. The subpixels on the first virtual image V1 are denoted by the same reference signs P1 through P12 as the subpixels shown in FIG. 3. The parallax barrier 11 with an aperture ratio of 50% includes the transmissive portions 11a and the light-reducing portions 11b each having the same width in the interocular direction (x-direction). The first virtual image V1 includes left light-reducing areas VbL with light reduced by the second virtual image V2. The left light-reducing areas VbL are less viewable with the left eye 31l of the user 30 when image light is reduced by the light-reducing portions 11b on the parallax barrier 11.

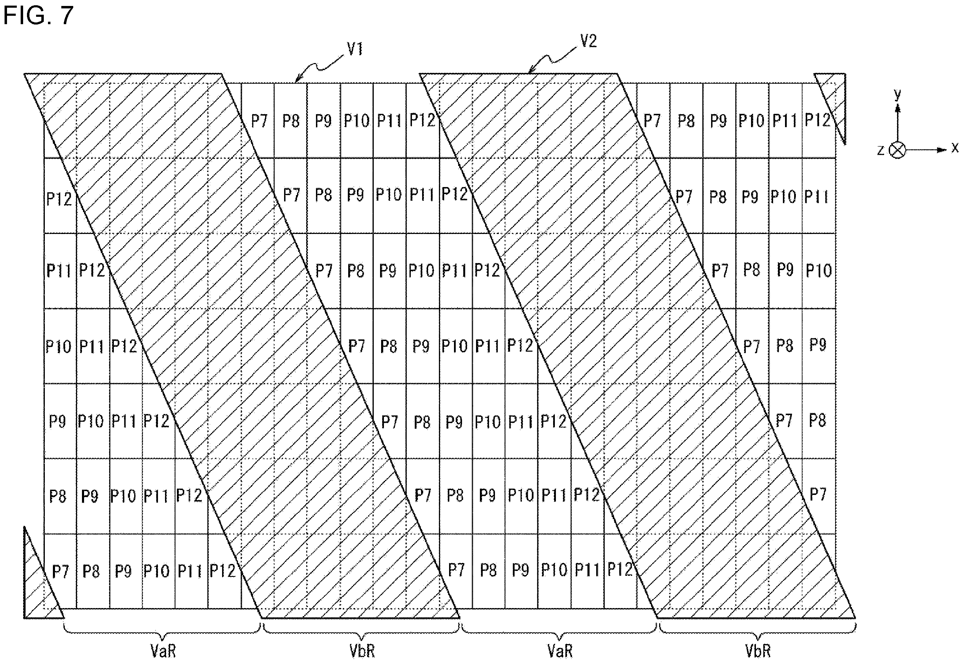

FIG. 7 shows an example array of subpixels of the first virtual image V1 viewed with the right eye 31r of the user 30 when the virtual image of the parallax barrier 11 located as shown in FIG. 6 is viewed with the left eye 31l of the user 30. The first virtual image V1 includes right light-reducing areas VbR with light reduced by the second virtual image V2. The right light-reducing areas VbR are less viewable with the right eye 31r of the user 30 when image light is reduced by the light-reducing portions 11b on the parallax barrier 11.

With the parallax barrier 11 having an aperture ratio of 50%, the left viewable areas VaL match the right light-reducing areas VbR, and the right viewable areas VaR match the left light-reducing areas VbL. With the parallax barrier 11 having an aperture ratio of less than 50%, the left viewable areas VaL are included in the right light-reducing areas VbR, and the right viewable areas VaR are included in the left light-reducing areas VbL. Thus, the right viewable areas VaR are not viewable with the left eye 31l. The left viewable areas VaL are not easily viewable with the right eye 31r.

In the example shown in FIGs. 6 and 7, each left viewable area VaL includes the virtual image of the entire area of each of the subpixels P2 to P5 arranged in the active area A and a major area of each of the subpixels P1 and P6 arranged in the active area A. The virtual image portions of the subpixels P7 to P12 arranged in the active area A are less easily viewable with the left eye 31l of the user 30. Each right viewable area VaR includes the virtual image of the entire area of each of the subpixels P8 to P11 arranged in the active area A and a major area of each of the subpixels P7 and P12 arranged in the active area A. The virtual image portions of the subpixels P1 to P6 arranged in the active area A are less easily viewable with the right eye 31r of the user 30. The controller 12 can cause the subpixels P1 to P6 to display the left eye image. The controller 12 can cause the subpixels P7 to P12 to display the right eye image. This allows the left eye 31l of the user 30 to mainly view the virtual image portions of the left eye image on the left viewable areas VaL and allows the right eye 31r to mainly view the virtual image portions of the right eye image on the right viewable areas VaR. As described above, the right eye image and the left eye image are parallax images having parallax between them. The user 30 can thus view the right eye image and the left eye image as a 3D image.

The memory 13 may include any storage device such as a random-access memory (RAM) or a read-only memory (ROM). The memory 13 can store programs for various processes, information obtained from the first input unit 7 and the second input unit 8, and information resulting from conversion performed by the controller 12. For example, the memory 13 stores positional information about the object 40 obtained by the first input unit 7. The memory 13 may store image elements 41 to be displayed as parallax images. The image elements 41 include text, graphics, and an animation combining text and graphics.

The controller 12 may be connected to each of the components of the HUD system 100 to control these components. The controller 12 may be, for example, a processor. The controller 12 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 12 may be either a system on a chip (SoC) or a system in a package (SiP) in which one or more processors cooperate with other components.

The controller 12 causes the display panel 10 to display the right eye image and the left eye image having parallax between them. The controller 12 can change, based on the positions of the eyes 31 of the user 30, the area in which the left eye image appears and the area in which the right eye image appears on the display panel 10. The controller 12 switches the image to be displayed by the subpixels on the display panel 10 between the right eye image and the left eye image.

With the left viewable areas VaL of the first virtual image V1 viewable with the left eye 31l of the user 30 located as shown in FIG. 6, the controller 12 causes the subpixels P1 to P6 to be viewable. With the right viewable areas VaR of the first virtual image V1 viewable with the right eye 31r of the user 30 located as shown in FIG. 7, the controller 12 causes the subpixels P7 to P12 to be viewable. Thus, with the first virtual image V1 viewed by the user 30 in the state in FIGs. 6 and 7, the controller 12 causes the subpixels P1 to P6 to display the left eye image and the subpixels P7 to P12 to display the right eye image. In another embodiment, the controller 12 can cause the subpixels P2 to P5 to display the left eye image and cause the subpixels P8 to P11 to display the right eye image. The controller 12 can cause the other subpixels P1, P6, P7, and P12 to display a black image with a luminance value of 0. This structure can reduce crosstalk effectively.

A change in the positions of the eyes 31 of the user 30 changes the range of the subpixels P1 to P12 used to display the virtual image viewable with the left eye 31l and the right eye 31r of the user 30. The controller 12 determines the subpixels to display the left eye image and the subpixels to display the right eye image among the subpixels P1 to P12 in each subpixel group Pg in accordance with the positions of the eyes 31 of the user 30. The controller 12 causes the subpixels determined for the left eye image to display the left eye image. The controller 12 causes the subpixels determined for the right eye image to display the right eye image.

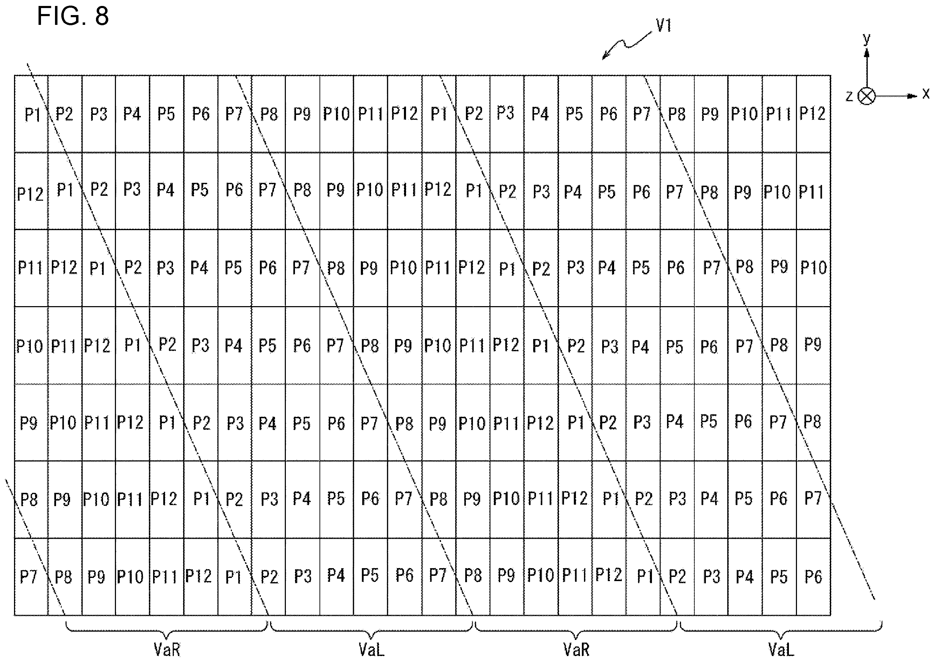

For example, the eyes 31 of the user 30 observing the first virtual image V1 as shown in FIGs. 6 and 7 may move relatively to the left. This causes the second virtual image V2 that is a virtual image of the parallax barrier 11 to appear to move to the right. This will be described with reference to FIG. 8. In FIG. 8, the dot-and-dash lines indicate virtual image portions at the boundaries between the transmissive portions 11a and the light-reducing portions 11b of the parallax barrier 11 with an aperture ratio of 50% as viewed with the left eye 31l and the right eye 31r. For example, the virtual image portions at the boundaries between the transmissive portions 11a and the light-reducing portions 11b of the parallax barrier 11 may move to the right as viewed from the user 30 as shown in FIG. 8. This causes the left viewable areas VaL and the right viewable areas VaR to also move to the right.

In the example shown in FIG. 8, each left viewable area VaL includes the entire area of each of the subpixels P3 to P6 and a major area of each of the subpixels P2 and P7. Each right viewable area VaR includes the entire area of each of the subpixels P9 to P12 and a major area of each of the subpixels P8 and P1. The controller 12 can thus cause the subpixels P2 to P7 on the display panel 10 to display the left eye image. The controller 12 can cause the subpixels P1 and P8 to P12 on the display panel 10 to display the right eye image.

The controller 12 can change the distance to an image element 41 viewable by the user 30 by varying the parallax of the image element 41. The image element 41 is included in a parallax image including a left eye image and a right eye image to appear on the display panel 10. Examples of the image element 41 include text, graphics, and an animation combining text and graphics. The parallax image may include one or more image elements 41 to be viewable at different distances from the user 30.

An image element 41 is displayed in a manner associated with the object 40 detectable by the first detector 1 in the field of view of the user 30. For the object 40 being a preceding vehicle traveling ahead of the movable body 20, the image element 41 may be text information indicating the speed of the object 40. For the object 40 decelerating, the image element 41 may be graphics showing an alert for a decreasing distance to the preceding vehicle that is decelerating. The image element 41 displayed in a manner associated with the object 40 may be at least partially superimposed on the object 40 and displayed at substantially the same distance as the object 40. The image element 41 superimposed on the object 40 in real space can provide visually augmented reality.

The controller 12 causes the controller 12 to display a target image element 41 included in the left eye image and the right eye image with intended parallax between these images. The parallax refers to the angular difference in the direction of gaze between the left eye 311 and the right eye 31r of a human viewing the object 40. The parallax can also be referred to as the angle of convergence. The parallax of the image element 41 corresponds to the angle of convergence when a left image element 421 displayed on the left eye image is viewed with the left eye 311 and a right image element 42r displayed on the right eye image is viewed with the right eye 31r. The controller 12 may obtain an image including text or graphics prestored in the memory 13. The controller 12 may calculate, in real time, the parallax based on the distance to the object 40, and may set the parallax between the left image element 421 and the right image element 42r of the image element 41 to appear on the display panel 10. The operation of the controller 12 for displaying the image element 41 will be described below.

Displaying Image Element

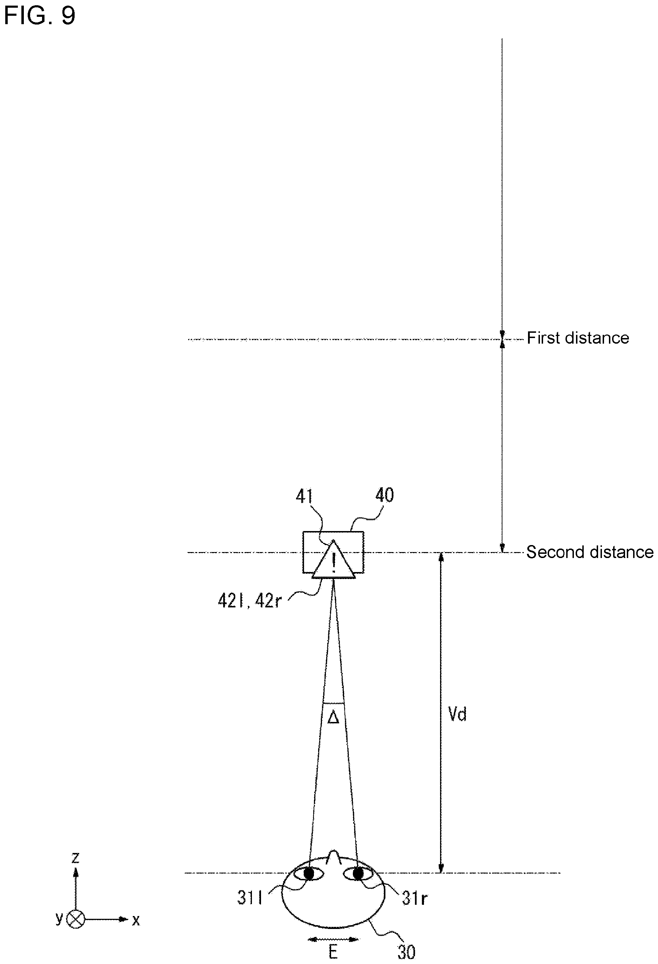

With the HUD 3, the left eye image and the right eye image displayed in the active area A of the display panel 10 are projected onto the virtual image plane Sv. The left eye image and the right eye image projected on the virtual image plane Sv have parallax between them and thus are viewed as a 3D image in the field of view of the user 30 with a dimension in z-direction (front-rear direction) in accordance with the parallax. A method used by the HUD 3 according to one or more embodiments of the present disclosure for displaying the image element 41 in accordance with the distance to the object 40 will now be described with reference to FIGs. 9 to 11. FIGs. 9 to 11 are diagrams viewed in y-direction, with the object 40, the image element 41, the left image element 421, and the right image element 42r being viewed from the front for ease of explanation.

In FIG. 9, the object 40 is located exactly at a second distance from the user 30 in z-direction. The second distance is the optimum viewing distance Vd. A portion of the object 40 viewed by the user 30 is located on the virtual image plane Sv. To display the image element 41 at the second distance, the controller 12 may set the angle of convergence in viewing the left image element 421 in the left eye image and the right image element 42r in the right eye image in the parallax image to match a convergence angle $\Delta$, which is the angle of convergence in viewing a point on the virtual image plane Sv. In this case, the position at which a virtual image of the image element 41 is actually projected matches the position at which the image element 41 viewed with the angle of convergence and appearing on the virtual image plane Sv, thus allowing the user 30 to view the image with minimum discomfort.

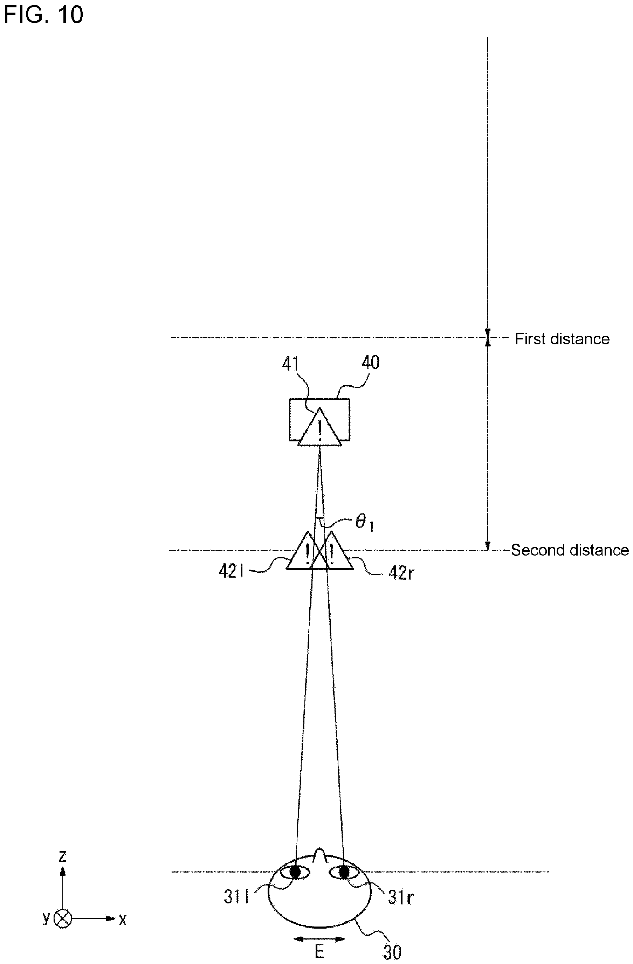

In FIG. 10, the object 40 is located at a distance greater than or equal to the second distance but less than a first distance from the user 30 frontward in z-direction. In this case, the controller 12 displays the left image element 421 and the right image element 42r at different positions on the virtual image plane Sv in accordance with the parallax. The left image element 421 is an image viewed from the left at a smaller angle with z-direction than for the image element 41 viewed from a position at the optimum viewing distance Vd. The right image element 42r is an image viewed from the right at a smaller angle with z-direction than the image element 41 viewed from a position at the optimum viewing distance Vd. The user 30 thus perceives the image element 41 appearing at the intersection between the direction of gaze in which the left eye 311 views the left image element 421 and the direction of gaze in which the right eye 31r views the right image element 42r. The angle of convergence with which the left eye 311 and the right eye 31r view a point on the image element 41 is referred to as a convergence angle $\theta 1$. The convergence angle $\theta 1$ is smaller than the convergence angle $\Delta$ used for viewing a point on the virtual image plane Sv. The left image element 421 and the right image element 42r having parallax between them are projected on the virtual image plane Sv in this manner to allow the user 30 to view the image element 41 as appearing frontward from the virtual image plane Sv.

Constantly calculating and updating the parallax for the parallax image including the image element 41 to reflect all the positions of the object 40 may increase the processing load of the HUD 3. For the object 40 at a distance greater than or equal to a predetermined first distance that is greater than the second distance, as noticed by the inventors, the parallax of the image element 41 may be fixed to a value of parallax corresponding to the first distance. With the parallax fixed to the value of parallax corresponding to the first distance, the image element 41 superimposed on the object 40 can be perceived with the cognition of the human brain as appearing at substantially the same distance as the object 40. This perception occurs seemingly due to the human brain that automatically merges the object 40 with the image element 41, superimposed on the object 40, having the parallax different from the parallax for the object 40, and views the image element 41 as appearing at substantially the same distance as the object 40. An experiment conducted by the inventors has confirmed this phenomenon using at least the first distance set to 12.5 m and the second distance to 7.5 m. When, for example, the image element 41 with the parallax corresponding to the distance of 12.5 m is superimposed on the object 40 located at a distance of 70 m from the user 30, the image element 41 appears to be at the same distance as the object 40. The experiment shows that the difference in the angle of convergence does not cause the outline of the image element 41 to appear double, blurred, or with any similar phenomenon.

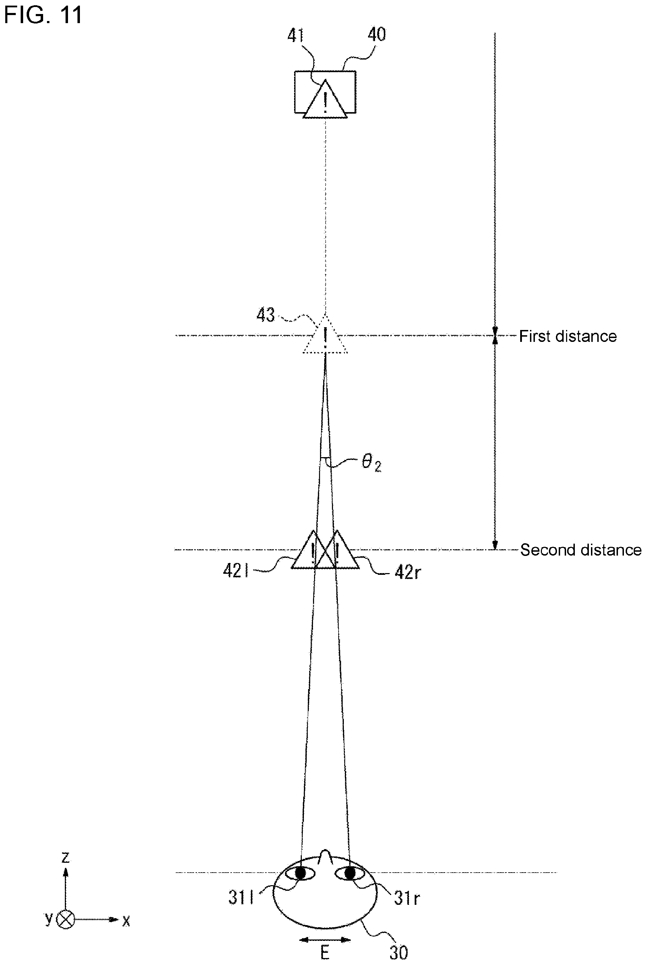

Thus, with the distance from the user 30 to the object 40 being greater than or equal to the first distance, the controller 12 performs first control for fixing the parallax of the image element 41 at least partially superimposed on the object 40 to the parallax corresponding to the first distance as shown in FIG. 11. The HUD 3 thus allows the user 30 to perceive, with the cognition of the human brain, the image element 41 to be located substantially at the same distance as the object 40. In the example of FIG. 11, the user 30 perceives the image element 41 to be at the position of the object 40, rather than at an image display position 43 corresponding to the distance based on parallax.

The parallax of the image element 41 is not zero at the first distance. More specifically, the structure according to one or more embodiments of the present disclosure differs from any other structure that fixes the parallax to 0 in areas corresponding to large distances and having almost no parallax. The parallax of the image element 41 is set to a sufficiently large value of parallax to allow the image element 41 to be perceived readily by a human when the image element 41 is not superimposed on the object 40. The angle of convergence at which a point on the left image element 42l in the left eye image is viewed with the left eye 31l and a point on the right image element 42r in the right eye image is viewed with the right eye 31r is fixed to a convergence angle $\theta2$ that is smaller than the convergence angle $\theta1$. The convergence angle $\theta2$ is used in viewing a point located at the first distance.

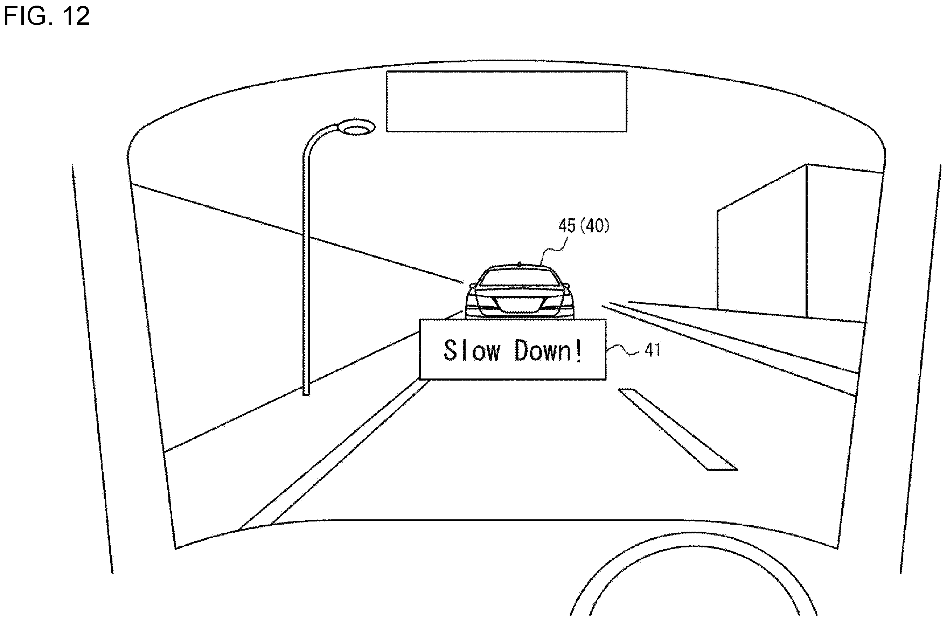

A display example of the image element 41 in one embodiment will now be described with reference to FIG. 12. FIG. 12 shows, as an example of the object 40, a preceding vehicle 45 traveling ahead at a distance greater than the first distance. The first detector 1 obtains positional information including the distance to the preceding vehicle 45 in chronological order and transmits the information to the controller 12. The preceding vehicle 45 may start decelerating. In response to receiving, from the first detector 1, information about any decreasing distance to the preceding vehicle 45, the controller 12 determines that the preceding vehicle 45 is decelerating. To alert the user 30, the controller 12 controls the display panel 10 to display an image element 41 carrying a message indicating the deceleration of the preceding vehicle 45 superimposed on the preceding vehicle 45 in the field of view of the user 30. The image element 41 may be displayed using text, graphics, or both. The image element 41 may be displayed together with an animation, such as movement, blinking, shape changing, or two or more of these items. The image element 41 is a parallax image with the parallax corresponding to the first distance. The image element 41 is perceived with the cognition of the brain of the user 30 as being at the same distance as the preceding vehicle 45. As the distance to the preceding vehicle 45 viewed from the user 30 changes, the image element 41 is perceived to follow the changes in the preceding vehicle 45.

Procedure for Displaying Image Element

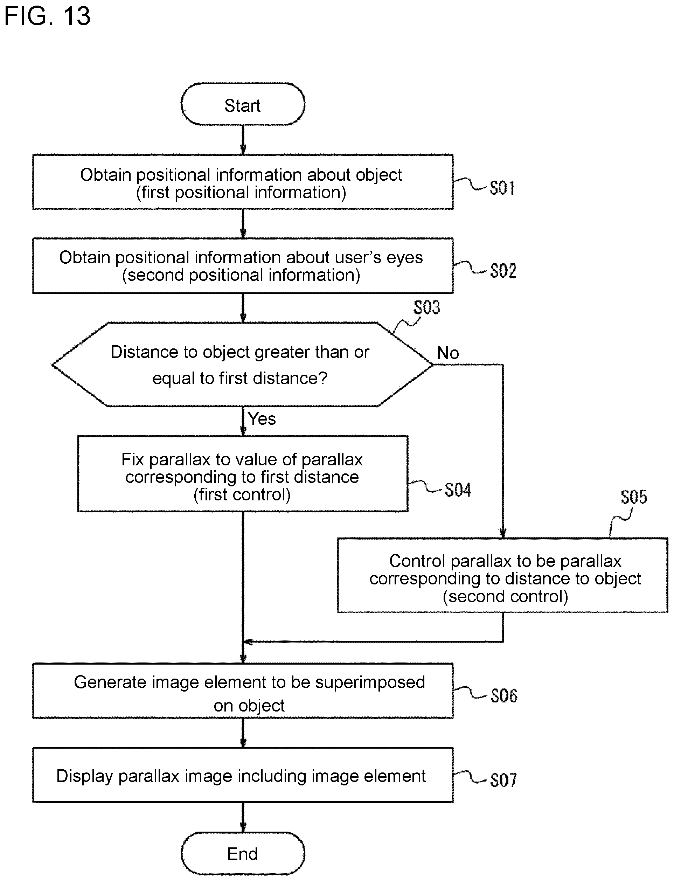

A method for displaying a parallax image with the controller 12 in the HUD 3 will be described with reference to FIG. 13. The controller 12 performs the procedure in the flowchart shown in FIG. 13.

The controller 12 obtains, from the first input unit 7, first positional information about the object 40 viewed frontward by the user 30 through the optical member 5 (step S01).

The controller 12 obtains second positional information about the positions of the eyes 31 of the user 30 from the second input unit 8 (step S02). Step S02 may be performed before step S01. Step S02 may be performed in parallel with step S01.

The controller 12 determines whether the distance to the object 40 is greater than the first distance based on the first positional information (step S03). The first distance is, for example, 12.5 m. The first distance may be greater than 12.5 m.

When the controller 12 determines that the distance to the object 40 is greater than or equal to the first distance in step S03 (Yes in step S03), the first control is performed (step S04). In the first control, the controller 12 fixes the parallax of the image element 41 to the parallax corresponding to the first distance. The parallax corresponding to the first distance is a value of parallax greater than 0.

When the controller 12 determines that the distance to the object 40 is less than the first distance in step S03 (No in step S03), second control is performed (step S05). In the second control, the controller 12 controls the parallax of the image element 41 to be the parallax corresponding to the distance to the object 40. When, for example, the distance to the object 40 is 10 m, the controller 12 sets the parallax between the left image element 42l and the right image element 42r to the parallax used in viewing a point at a distance of 10 m ahead.

When the distance to the object 40 is less than the second distance in step S05, the controller 12 displays the image element 41 in front of the user 30 from the virtual image plane Sv. The second distance is the optimum viewing distance Vd. The second distance may be greater than 7.5 m and less than the first distance. The controller 12 can also perform processing different from step S05 when the distance to the object 40 is less than the second distance. For example, the controller 12 may fix the parallax of the image element 41 to the parallax corresponding to the second distance when the distance to the object 40 is less than the second distance.

The controller 12 generates an image element 41 to be superimposed on the object 40 (step S06). For example, the controller 12 determines the image element 41 to be displayed based on, for example, the distance to the object 40 and its changes included in the positional information about the object 40 obtained in step S01. The controller 12 may receive an instruction from another device included in the movable body 20 for the image element 41 to be displayed. The controller 12 determines the display position of the image element 41 on the display panel 10 based on the positional information about the object 40 obtained in step S01 and the positional information about the eyes 31 of the user 30 obtained in step S02. The controller 12 causes the image element 41 to be at least partially superimposed on the object 40 viewed by the user 30. The controller 12 may drive the drive 15 through the output unit 14 to adjust the display position of the image element 41 as appropriate. The controller 12 sets the parallax of the image element 41 based on the parallax determined in step S04 or in step S05. The controller 12 can merge one or more image elements 41 into a parallax image.

The controller 12 causes the display panel 10 to display the parallax image resulting from the merging (step S07). This causes the image element 41 superimposed on the object 40 to appear in the field of view of the user 30. The image element 41 is perceived by the user 30 as being at the same distance as the object 40.

In the HUD system 100 according to one or more embodiments of the present disclosure described above, the controller 12 performs control not to fix the parallax of the image element 41 when the distance to the object 40 is greater than or equal to the first distance. The HUD system 100 can thus reduce the processing load for the merging and display of a 3D image superimposed on the object 40. A 3D display device is known to cause discomfort and visual fatigue when the difference is large between the distance to the display surface on which the image is actually displayed (the virtual image plane Sv herein) and the distance to the display image perceived by the user 30 with the parallax between the two eyes. The HUD 3 according to one or more embodiments of the present disclosure does not have a large difference between the second distance corresponding to the distance to the virtual image plane Sv and the first distance, thus reducing such discomfort and visual fatigue.

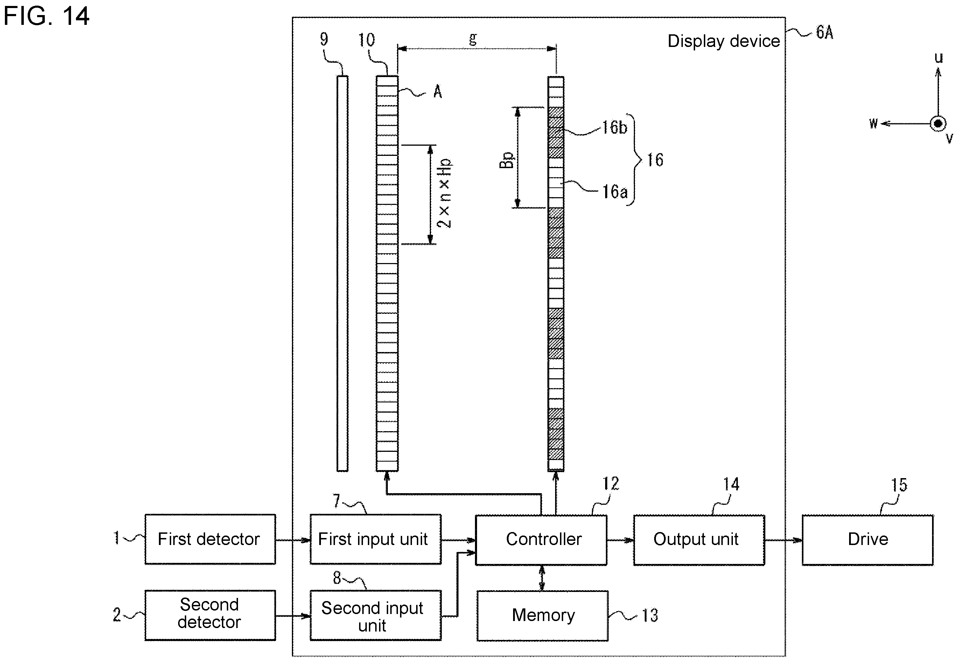

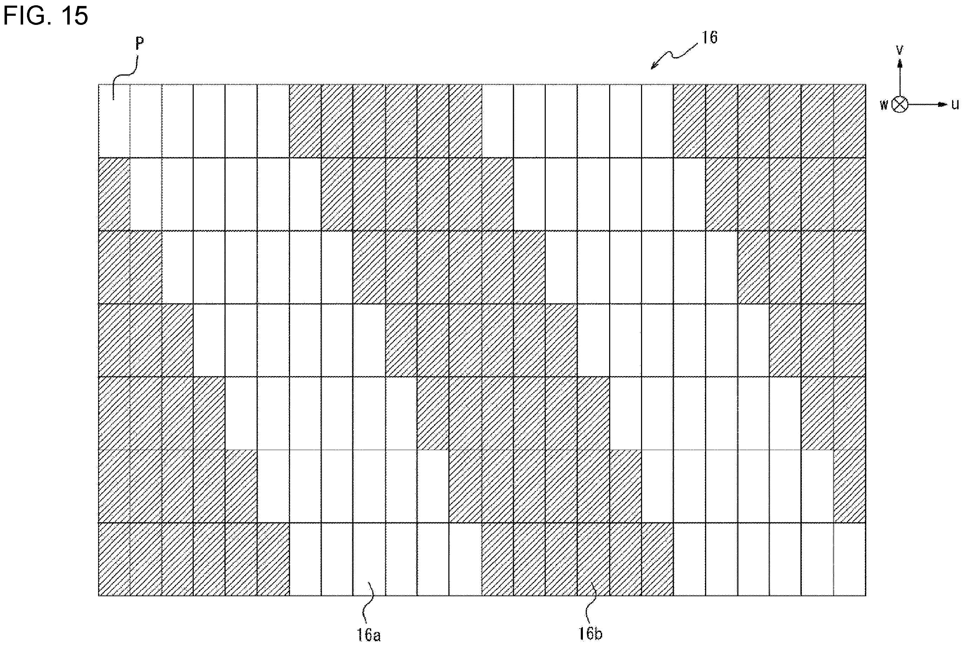

The display device 6 according to the above embodiment includes the parallax barrier 11 as an optical element that causes the left eye image and the right eye image displayed on the display panel 10 to reach the left eye 31l and the right eye 31r of the user 30. However, the optical element is not limited to the parallax barrier 11. The parallax barrier 11 may be replaced by, for example, a liquid crystal shutter or a lenticular lens. FIG. 14 shows an example display device 6A including a liquid crystal shutter 16 in place of the parallax barrier 11. The structure and the operation of the display device 6A will now be described with reference to FIGs. 14 and 15.

As shown in FIG. 14, the liquid crystal shutter 16 is controlled by the controller 12. The display device 6A has the same structure as the display device 6 shown in FIG. 2, except that the parallax barrier 11 is replaced by the liquid crystal shutter 16. As shown in FIG. 15, the liquid crystal shutter 16 may have the structure similar to the display panel 10. The liquid crystal shutter 16 includes multiple pixels P. The liquid crystal shutter 16 can control the light transmittance of each pixel P. The multiple pixels P included in the liquid crystal shutter correspond to the multiple subpixels included in the display panel 10. The multiple pixels P in the liquid crystal shutter 16 differ from the subpixels in the display panel 10 in that the pixels P have no color components. When the user 30 views a first virtual image V1 of the display panel 10 and a second virtual image V2 of the liquid crystal shutter 16 superimposed on each other, the pixels P in the liquid crystal shutter 16 may be in the same shape and the same size as the subpixels in the display panel 10.

The liquid crystal shutter 16 includes multiple transmissive portions 16a and multiple light-reducing portions 16b as controlled by the controller 12. The transmissive portions 16a may have the same light transmittance as the transmissive portions 11a in the parallax barrier 11, and the light-reducing portions 16b may have the same light transmittance as the light-reducing portions 11b in the parallax barrier 11. The transmissive portions 16a and the light-reducing portions 16b are defined in correspondence with the pixels in the liquid crystal shutter 16. For the optical element including the liquid crystal shutter 16, the boundaries between the transmissive portions 16a and the light-reducing portions 16b may be staggered along the shapes of the pixels P. The boundaries between the transmissive portions 16a and the light-reducing portions 16b of the liquid crystal shutter 16 can be changed dynamically to reduce crosstalk. When the positions of the eyes 31 of the user 30 change relative to x-direction, the controller 12 can switch between the transmissive portions 16a and the light-reducing portions 16b of the liquid crystal shutter 16, instead of switching the image for each subpixel in the display panel 10. For example, the controller 12 may control the liquid crystal shutter 16 and cause the highest proportion of image light to travel from the subpixels P1 to P6 displaying the left eye image to the left eye 31l

of the user 30. For example, the controller 12 may control the liquid crystal shutter 16 and cause the highest proportion of image light to travel from the subpixels P7 to P12 displaying the right eye image to the right eye 31r of the user 30.

Although the embodiments of the present disclosure have been described with reference to the drawings and examples, those skilled in the art can easily make various modifications or alterations based on one or more embodiments of the present disclosure. Such modifications or alterations also fall within the scope of the present disclosure. For example, the functions of the components or steps are reconfigurable unless any contradiction arises. Multiple components or steps may be combined into a single unit or step, or a single component or step may be divided into separate units or steps. The embodiments of the present disclosure can also be implemented as a method or a program implementable by a processor included in the device, or as a storage medium storing the program. The method, program, and storage medium also fall within the scope of the present disclosure.

In the present disclosure, the first, the second, or others are identifiers for distinguishing the components. The identifiers of the components distinguished with the first, the second, and others in the present disclosure are interchangeable. For example, the first input unit may be interchangeable with the second input unit. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller or larger number identifiers.

In the present disclosure, x-direction, y-direction, and z-direction are used for ease of explanation and may be interchangeable with one another. The Cartesian coordinate system including axes in x-direction, y-direction, and z-direction is used to describe the structures according to the present disclosure. The positional relationship between the components in the present disclosure is not limited to being orthogonal. The same applies to u-direction, v-direction, and w-direction.

The movable body according to one or more embodiments of the present disclosure includes a vehicle, a vessel, or an aircraft. The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an agricultural vehicle or a construction vehicle. The industrial vehicle includes, but is not limited to, a forklift or a golf cart. The agricultural vehicle includes, but is not limited to, a tractor, a cultivator, a transplanter, a binder, a combine, or a lawn mower. The construction vehicle includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within multiple classes. The vessel according to one or more embodiments of the present disclosure includes a jet ski, a boat, or a tanker. The aircraft according to one or more embodiments of the present disclosure includes a fixed-wing aircraft or a rotary-wing aircraft.

The present disclosure may be implemented in the following forms.

A head-up display according to one or more embodiments of the present disclosure includes a first input unit, a second input unit, a display panel, an optical system, a processor, and an optical element. The first input unit obtains first positional information about a position of an object including a distance to the object. The second input unit obtains second positional information about a position of at least a first eye or a second eye of a user. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor performs first control to fix, in response to the distance to the object being greater than or equal to a predetermined first distance, parallax of the image element to a value of parallax greater than 0 corresponding to the first distance.

A head-up display system according to one or more embodiments of the present disclosure includes a first detector, a second detector, and a head-up display. The first detector detects first positional information about a position of an object including a distance to the object. The second detector detects second positional information about a position of at least a first eye or a second eye of a user. The head-up display includes a first input unit, a second input unit, a display panel, an optical system, a processor, and an optical element. The first input unit obtains the first positional information from the first detector. The second input unit obtains the second positional information from the second detector. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor fixes, in response to the distance to the object being greater than or equal to a predetermined first distance, parallax of the image element to a value of parallax greater than 0 corresponding to the first distance.

A movable body according to one or more embodiments of the present disclosure includes a head-up display system. The head-up display system includes a first detector, a second detector, and a head-up display. The first detector detects first positional information about a position of an object including a distance to the object. The second detector detects second positional information about a position of at least a first eye or a second eye of a user. The head-up display includes a first input unit, a second input unit, a display panel, an optical system, a processor, and an optical element. The first input unit obtains the first positional information from the first detector. The second input unit obtains the second positional information from the second detector. The optical system projects, into a field of view of the user, a virtual image of an image displayed on the display panel. The processor causes the display panel to display a parallax image including a first image and a second image having parallax between the first image and the second image. The optical element causes, through the optical system, the first image displayed on the display panel to reach the first eye of the user and the second image displayed on the display panel to reach the second eye of the user. The processor causes the display panel to display an image element included in the parallax image as being at least partially superimposed on the object viewable by the user based on the first positional information and the second positional information. The processor fixes, in response to the distance to the object being greater than or equal to a predetermined first distance, parallax of the image element to a value of parallax greater than 0 corresponding to the first distance.

The structure according to the embodiments of the present disclosure can reduce the processing load for displaying a 3D image superimposed on an object.

Although the embodiments of the present disclosure have been described in detail, the present disclosure is not limited to the above embodiments, and may be modified or changed variously without departing from the spirit and scope of the present disclosure. The components described in the above embodiments may be entirely or partially combined as appropriate unless any contradiction arises.

Reference Signs List

| | |
|---|---|
| 1 | first detector |
| 2 | second detector |
| 3 | head-up display (HUD) |
| 4 | reflector (optical system) |
| 5 | optical member (optical system) |
| 6 | display device |
| 7 | first input unit |
| 8 | second input unit |
| 9 | illuminator |
| 10 | display panel |
| 11 | parallax barrier (optical element) |
| 11a | transmissive portion |
| 11b | light-reducing portion |
| 12 | controller |
| 13 | memory |
| 14 | output unit |
| 15 | drive |
| 16 | liquid crystal shutter (optical element) |
| 16a | transmissive portion |
| 16b | light-reducing portion |
| 20 | movable body |
| 30 | user |
| 31 | eye |
| 31l | left eye (first eye) |
| 31r | right eye (second eye) |
| 40 | object |

41      image element
421     left image element
42r     right image element
43      image display position corresponding to distance based on parallax
45      preceding vehicle (object)
100     head-up display (HUD) system
A       active area
Sv      virtual image plane
V1      first virtual image
V2      second virtual image VaLleft viewable area
VbL     left light-reducing portion VaRright viewable area
VbR     right light-reducing portion


**Claims**

1.  A head-up display, comprising:

    a first input unit configured to obtain first positional information about a position of an object, the first positional information including a distance to the object;
    a second input unit configured to obtain second positional information about a position of at least a first eye or a second eye of a user;
    a display panel;
    an optical system configured to project, into a field of view of the user, a virtual image of an image displayed on the display panel;
    a processor configured to cause the display panel to display a parallax image including a first image and a second image having parallax between the first image and the second image; and
    an optical element configured to cause, through the optical system, the first image displayed on the display panel to reach the first eye of the user and the second image displayed on the display panel to reach the second eye of the user,
    wherein the processor causes the display panel to display an image element included in the parallax image as being at least partially superimposed on the object viewable by the user based on the first positional information and the second positional information, and the processor performs first control to fix, in response to the distance to the object being greater than or equal to a predetermined first distance, parallax of the image element to a value of parallax greater than 0 corresponding to the first distance.

2.  The head-up display according to claim 1, wherein
    in response to the distance to the object being greater than or equal to the first distance, the processor causes the image element to be perceived by the user, with cognition of a human brain, as being substantially at a same distance as the object.

3.  The head-up display according to claim 1 or claim 2, wherein
    in response to the distance to the object being between a second distance at which a virtual image of an image displayed on the display panel is projected by the optical system and the first distance greater than the second distance, the processor performs second control to set the parallax of the image element to a value of parallax corresponding to the distance to the object.

4.  The head-up display according to claim 3, wherein
    the second distance is greater than 7.5 m.

5.  The head-up display according to any one of claims 1 to 4, wherein
    the first distance is greater than 12.5 m.

6.  A head-up display system, comprising:

    a first detector configured to detect first positional information about a position of an object, the first positional information including a distance to the object;
    a second detector configured to detect second positional information about a position of at least a first eye or a second eye of a user; and
a head-up display including

a first input unit configured to obtain the first positional information from the first detector,
a second input unit configured to obtain the second positional information from the second detector,
a display panel,
an optical system configured to project, into a field of view of the user, a virtual image of an image displayed on the display panel,
a processor configured to cause the display panel to display a parallax image including a first image and a second image having parallax between the first image and the second image, and
an optical element configured to cause, through the optical system, the first image displayed on the display panel to reach the first eye of the user and the second image displayed on the display panel to reach the second eye of the user,

wherein the processor causes the display panel to display an image element included in the parallax image as being at least partially superimposed on the object viewable by the user based on the first positional information and the second positional information, and the processor fixes, in response to the distance to the object being greater than or equal to a predetermined first distance, parallax of the image element to a value of parallax greater than 0 corresponding to the first distance.

7. A movable body, comprising:

a head-up display system including

a first detector configured to detect first positional information about a position of an object, the first positional information including a distance to the object,
a second detector configured to detect second positional information about a position of at least a first eye or a second eye of a user, and
a head-up display including

a first input unit configured to obtain the first positional information from the first detector,
a second input unit configured to obtain the second positional information from the second detector,
a display panel,
an optical system configured to project, into a field of view of the user, a virtual image of an image displayed on the display panel,
a processor configured to cause the display panel to display a parallax image including a first image and a second image having parallax between the first image and the second image, and
an optical element configured to cause, through the optical system, the first image displayed on the display panel to reach the first eye of the user and the second image displayed on the display panel to reach the second eye of the user,

wherein the processor causes the display panel to display an image element included in the parallax image as being at least partially superimposed on the object viewable by the user based on the first positional information and the second positional information, and the processor fixes, in response to the distance to the object being greater than or equal to a predetermined first distance, parallax of the image element to a value of parallax greater than 0 corresponding to the first distance.

FIG. 1

EP 4 057 049 A1

EP 4 057 049 A1

FIG. 2

EP 4 057 049 A1

FIG. 3

$2 \times n \times Hp$

Hp

Pg

Pg

10

A

V

W

u

| P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 | P12 |
|----|----|----|----|----|----|----|----|----|-----|-----|-----|----|----|----|----|----|----|----|----|----|-----|-----|-----|
| P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 |
| P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 |
| P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 |
| P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 |
| P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 |
| P7 | P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 |

Pg

FIG. 4

EP 4 057 049 A1

FIG. 5

EP 4 057 049 A1

FIG. 6

EP 4 057 049 A1

FIG. 7

EP 4 057 049 A1

# FIG. 8

V1

| P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 | P12 |
| P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 |
| P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 |
| P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 |
| P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 |
| P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 |
| P7 | P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 |

VaR          VaL          VaR          VaL

EP 4 057 049 A1

FIG. 9

First distance

Second distance

41    40

421, 42r

Vd

z

y ⊗ → x

31l    31r

E    30

FIG. 10

First distance

Second distance

41   40

$\theta_1$

42l   42r

z

y⊗ → x

31l   31r

E   30

FIG. 11

FIG. 12

45 (40)

Slow Down! 41

## FIG. 13

```
                    ┌─────────────┐
                    │    Start    │
                    └─────────────┘
                           │
                           ▼
        ┌─────────────────────────────────────────┐
        │  Obtain positional information about object  │── S01
        │        (first positional information)         │
        └─────────────────────────────────────────┘
                           │
                           ▼
        ┌─────────────────────────────────────────┐
        │ Obtain positional information about user's eyes │── S02
        │       (second positional information)        │
        └─────────────────────────────────────────┘
                           │          S03
                           ▼
              ╱─────────────────────────────╲
             ╱  Distance to object greater than or ╲   No
             ╲     equal to first distance?        ╱─────┐
              ╲─────────────────────────────╱      │
                           │ Yes                    │
                           ▼                        │
        ┌──────────────────────────┐                │
        │  Fix parallax to value of parallax │       │
        │   corresponding to first distance  │── S04  │
        │          (first control)          │        │
        └──────────────────────────┘                │
                           │                        ▼         S05
                           │         ┌────────────────────────────┐
                           │         │   Control parallax to be parallax  │
                           │         │ corresponding to distance to object │
                           │         │          (second control)          │
                           │         └────────────────────────────┘
                           │                        │
                           ◄────────────────────────┘
                           ▼
        ┌─────────────────────────────────────────┐
        │  Generate image element to be superimposed   │── S06
        │                 on object                    │
        └─────────────────────────────────────────┘
                           │
                           ▼
        ┌─────────────────────────────────────────┐
        │  Display parallax image including image element │── S07
        └─────────────────────────────────────────┘
                           │
                           ▼
                    ┌─────────────┐
                    │     End     │
                    └─────────────┘
```

FIG. 14

EP 4 057 049 A1

Display device 6A

9 10 g

A

2×n×Hp

16b
16a } 16

Bp

u
w
v

First detector 1 → First input unit 7 → Controller 12 → Output unit 14 → Drive 15

Second detector 2 → Second input unit 8

Memory 13

FIG. 15

EP 4 057 049 A1

## INTERNATIONAL SEARCH REPORT

| | International application No. |
|---|---|
| | PCT/JP2020/041872 |

### A. CLASSIFICATION OF SUBJECT MATTER

G02B 27/01(2006.01)i; B60K 35/00(2006.01)i; G02B 30/00(2020.01)i; G06T 19/00(2011.01)i; G09G 5/00(2006.01)i; G09G 5/36(2006.01)i; H04N 13/128(2018.01)i; H04N 13/31(2018.01)i; H04N 13/317(2018.01)i; H04N 13/346(2018.01)i; H04N 13/363(2018.01)i; H04N 13/366(2018.01)i

FI: G02B27 /01; G02B30/00; G09G5/00 550C; G09G5/00 510G; G09G5/36 510V; B60K35/00 A; H04N13/31; H04N13/317; H04N13/128; H04N13/346; H04N13/363; G06T19/00 F; G06T19/00 600; H04N13/366

According to International Patent Classification (IPC) or to both national classification and IPC

### B. FIELDS SEARCHED

Minimum documentation searched (classification system followed by classification symbols)

G02B27/01; B60K35/00; G02B30/00; G06T19/00; G09G5/00; G09G5/36; H04N13/128; H04N13/31; H04N13/317; H04N13/346; H04N13/363; H04N13/366

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-194709 A (PANASONIC IP MANAGEMENT CO., LTD.) 05 November 2015 (2015-11-05) paragraphs [0032]-[0038], fig. 2-4 | 1-7 |
| Y | JP 2016-107945 A (RICOH CO., LTD.) 20 June 2016 (2016-06-20) paragraphs [0023]-[0024], [0052]-[0055] | 1-7 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 January 2021 (13.01.2021) | 26 January 2021 (26.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

<table>
<tr><td colspan="2" style="text-align:center">**INTERNATIONAL SEARCH REPORT**<br>Information on patent family members</td><td>International application No.<br><br>PCT/JP2020/041872</td></tr>
</table>

| Patent Documents referred in the Report | Publication Date | Patent Family | Publication Date |
|---|---|---|---|
| JP 2015-194709 A | 05 Nov. 2015 | US 2016/0173867 A1<br>paragraphs [0030]-[0039], fig. 2-4<br>EP 3125017 A1 | |
| JP 2016-107945 A | 20 Jun. 2016 | US 2016/0170487 A1<br>paragraphs [0044]-[0045], [0077]-[0079]<br>EP 3031655 A1 | |

Form PCT/ISA/210 (patent family annex) (January 2015)

32

**EP 4 057 049 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009008722 A